# EUROPEAN PATENT SPECIFICATION

(11) **EP 1 740 440 B1**
(45) Date of publication and mention of the grant of the patent: **15.07.2009**
(21) Application number: 05729663.4
(22) Date of filing: 04.04.2005
(51) Int. Cl.: B62D 25/18

(54) **SPRAY PREVENTION DEVICE**
VORRICHTUNG ZUR VERHINDERUNG VON SPRITZWASSER
DISPOSITIF ANTI-GICLEES

(30) Priority: 03.04.2004 GB 0407653
(43) Date of publication of application: 10.01.2007
(73) Proprietor: Spraydown Limited, Cambusbarron Stirling FK8 3AQ (GB)
(72) Inventor: DOWNES, John Anthony, Bromborough, Wirral L63 0NE (GB)
(74) Representative: Marles, Alan David
(86) International application number: PCT/GB2005/001292
(87) International publication number: WO 2005/095188

(56) References cited:
- EP-A- 0 825 095
- GB-A- 2 229 689
- GB-A- 2 265 875
- US-A- 5 564 750

## Description

The present invention relates to a device to prevent spray from emerging from the wheels of vehicles travelling along roadways in wet weather.

When vehicles (particularly large vehicles such as lorries) travel along a roadway in wet weather, a spray or mist is generated by the wheels which can seriously impair the vision of drivers of vehicles behind. This is very dangerous and can lead to accidents.

The spray occurs because water on the road is picked up by the rotating tyres and thrown off against the wheel arch. As the water hits the wheel arch, so the water is broken up into small droplets and atomised in the air to create a fine spray or mist. This spray is then ejected sideways out of the wheel arch. In extreme conditions, this spray can be impossible to see through.

It has been known to try and reduce such a spray by lining the rear of a wheel arch with a flap with surface bristles or a mesh which helps to cushion or reduce reflection of the water as it emerges from the wheel. This helps to reduce the break up of water into small particles. This does not however separate the water from the air.

UK Patent specification 2229689, disclosing the preamble to claim 1, describes a spray inhibiting wheel guard. This wheel guard is curved to form the rear half of a wheel arch, and consists of a series of longitudinal channels between baffles to guide water out of the wheel arch area and direct it back on to a roadway. It has been found that this arrangement does not work since, when the vehicle is travelling at speed, air is forced into the upper area of the channels creating a back pressure in the channels by travelling down the pockets which prevents the spray from entering the channels.

The present invention seeks to provide a solution to this problem by separating the water from the air in the spray rather than trying to inhibit its formation.

According to the present invention there is provided a device for preventing spray from emerging from a wheel of a vehicle, the device consisting of a panel formed from a plurality of baffles in a side by side, overlapping relationship to define therebetween at least one passage which leads from a first side of the panel which receives water released by the wheel as it rotates to a rear second side of the panel, at least part of the or each passage being other than normal to the plane of the panel and having one or more changes of direction from the first side to the second side of the panel, and at least one water-collecting pocket provided along the side of each passage, **characterised in that** the panel is substantially planar for mounting substantially vertically behind a vehicle wheel with the baffles substantially vertical and in that the baffles are extruded and spacers are provided between the baffles, the spacers being supported by elongate shafts which are horizontal in use, wherein, in use, said one or more changes of direction cause air and water entering the or each passage to separate so that air passes through the or each passage and mixes with ambient air on the second side of the panel and water collects in the or each water-collecting pocket and falls from the bottom of the panel.

Preferably the baffles are substantially identical in shape. In preferred embodiments the or each passage is curvaceous and also the water-collecting pockets are located following each change of direction in the or each passage.

Preferably the or each pocket is a channel running substantially vertically along its respective baffle so that, in use, water drains from the baffles on to a surface on which the wheel is travelling.

It is a further preferred feature that the or each passage has two changes of direction.

The or each channel may be substantially U-shaped.

An embodiment of the invention will now be described with reference to the accompanying drawings in which:
Figure 1 shows a perspective view of the wheel arch of a road vehicle with the device fitted,
Figure 2 shows an enlarged view of Figure 1,
Figure 3 shows a section of Figure 1 showing in schematic form the flow of air and spray there through; and
Figure 4 shows a perspective view of an alternative configuration of the device.

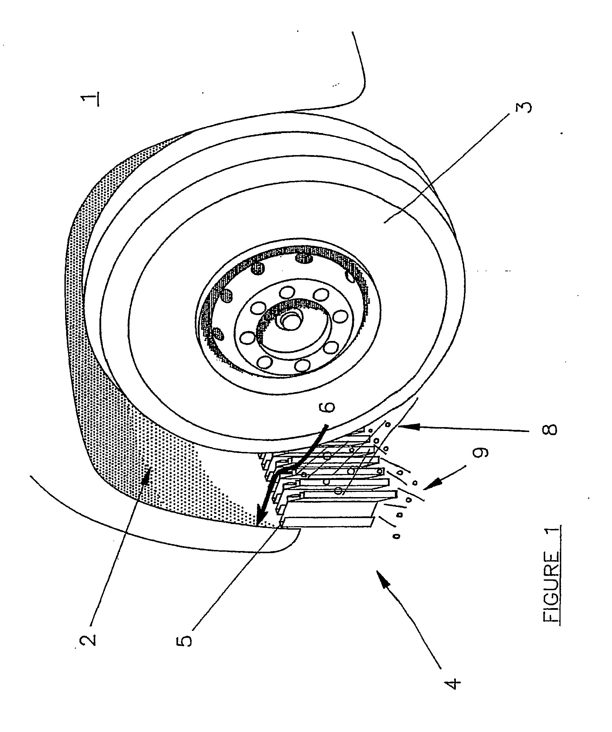

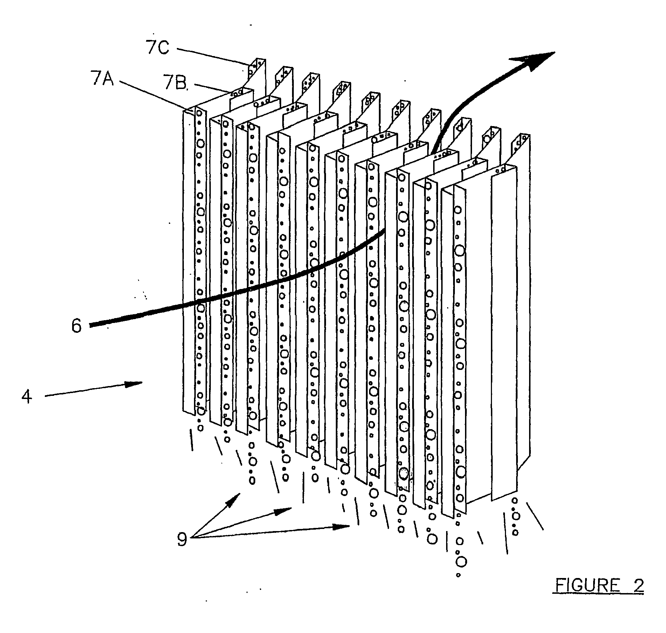

Referring to Figure 1 there is shown a vehicle 1 with a wheel arch 2 over a wheel 3. Mounted below the wheel arch and between the wheel 3 and wheel arch 2 is a generally planar panel 4 made up from a plurality of identical baffles 5 with passages 6 leading from a first side of the panel through to a second side of the panel as shown more clearly in Figure 2. Each baffle includes three water-collecting pockets in the form of vertical U-shaped channels 7A, 7B, 7C on the side of the passage 6. In use (as described more fully below) on wet road surfaces, water 8 is thrown up by the wheel onto the first side of the panel 4 and passes with air through the passage 6, but a substantial amount of the water is separated from the air by means of inertial forces and collected by channels 7A, 7B, 7C and falls as a stream of water 9 out of the bottom of the panel.

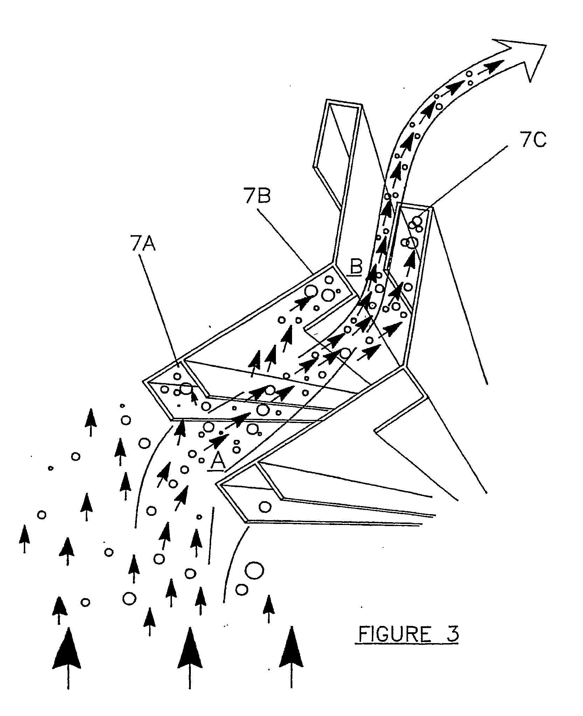

Referring now to Figures 2 and 3, it will be seen that the baffles 5 each overlap so that the passage takes a generally curvaceous path through the pane 4, i.e. the passage is not normal to the plane of the panel and is non-linear through the panel.

Figure 3 shows a path of water and air being thrown at two of the baffles. As viewed, the left hand part of the path throws water and air into the first channel 7A where water will collect. The path then changes direction a first time as shown at "A" as it follows the passage 6. As it changes direction, because water is heavier than air, the water particles tend to follow a straight path and leave the air flow at a tangent thereto into pocket 7B located at a tangent to the change of direction of the passage. The path then changes direction a second time as shown at "B" as it exits passage 6 and much of the water not collected by pocket 7B will leave the air flow at a tangent into pocket 7C located at a tangent to the second change of direction of the passage 6. The air, with much reduced water content, exiting the passage 6 is free to mix with ambient air.

It has been found that good separation of water from air is achievable.

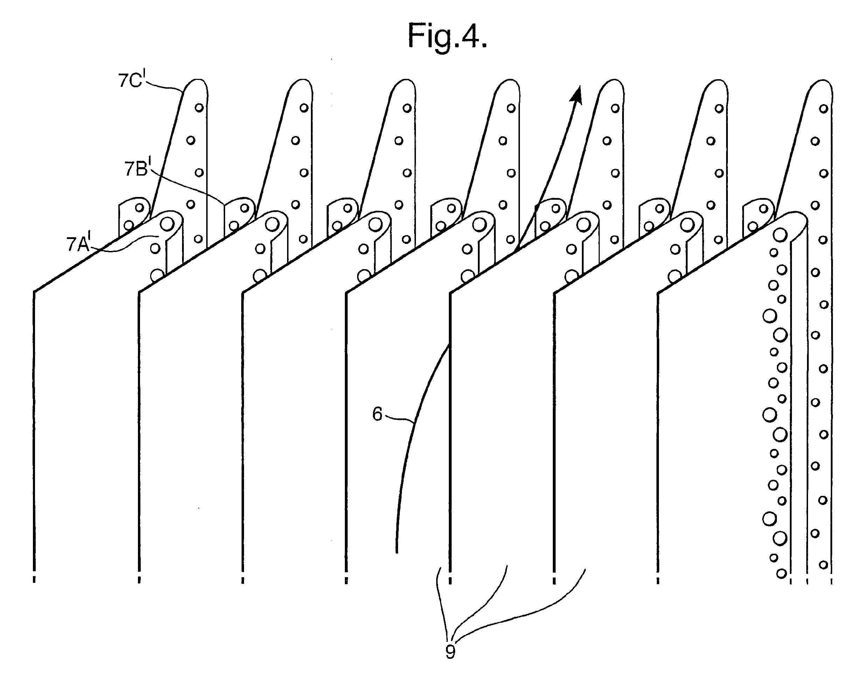

An alternative baffle arrangement is shown in Figure 4. The U-shaped channels 7A', 7B', 7C' have a rounded profile.

As water and air enter the passage 6 they change direction. The water, being the heavier component, tends to enter channel 7A', while the air flows past. Any water that remains in the flow is caught in turn by channels 7B' and 7C' respectively as the stream is forced to change direction again.

It is envisaged that the panel may take a form different to those specifically described above. For example the passage through the panel may change direction only once or more than twice. The pockets may be other than U-shaped channels.

It is envisaged that such a panel is formed by extruding the baffles, and joining the baffles in side by side relationship with elongate horizontal shafts supporting spacers between baffles.

Further modifications will be apparent to those skilled in the art without departing from the scope of the present invention.

## Claims

1. A device for preventing spray from emerging from a wheel of a vehicle, the device consisting of a panel (4) formed from a plurality of baffles (5) in a side by side, overlapping relationship to define therebetween at least one passage (6) which leads from a first side of the panel which receives water released by the wheel as it rotates to a rear second side of the panel, at least part of the or each passage (6) being other than normal to the plane of the panel and having one or more changes of direction from the first side to the second side of the panel, and at least one water-collecting pocket (7A-7C) provided along the side of each passage, **characterised in that** the panel (4) is substantially planar for mounting substantially vertically behind a vehicle wheel with the baffles (5) substantially vertical and **in that** the baffles (5) are extruded and spacers are provided between the baffles, the spacers being supported by elongate shafts which are horizontal in use, wherein, in use, said one or more changes of direction cause air and water entering the or each passage to separate so that air passes through the or each passage and mixes with ambient air on the second side of the panel and water collects in the or each water-collecting pocket and falls from the bottom of the panel.

2. A device as claimed in claim 1 wherein the baffles (5) are substantially identical in shape.

3. A device as claimed in claim 1 or claim 2 wherein the or each passage (6) is curvaceous.

4. A device as claimed in any one of claims 1 to 3 wherein the water-collecting pockets (7A-7C) are located following each change of direction in the or each passage (6).

5. A device as claimed in any one of claims 1 to 4 wherein the or each passage (6) has two changes of direction.

6. A device as claimed in any one of the preceding claims wherein the or each pocket (7A-7C) is a channel running substantially vertically along its respective baffle (5) so that, in use, water drains from the baffles on to a surface on which the wheel is travelling.

7. A device as claimed in claim 6, wherein the or each channel (7A-7C) is substantially U-shaped.

## Patentansprüche

1. Vorrichtung zum Verhindern eines Austretens von Spritzwasser von einem Rad eines Fahrzeugs, bestehend aus einem Plattenelement (4), welches aus einer Vielzahl von Blenden (5) gebildet ist, die überlappend nebeneinander angeordnet sind, um dazwischen mindestens einen Kanal (6) zu bilden, der von einer ersten, das von dem sich drehenden Rad abgegebene Wasser empfangenden Seite des Plattenelements zu einer rückwärtigen zweiten Seite des Plattenelements führt, wobei mindestens ein Teil des mindestens einen Kanals (6) anders als normal zur Ebene des Plattenelements verläuft und einen oder mehrere Richtungswechsel zwischen der ersten Seite und der zweiten Seite des Plattenelements aufweist, und aus mindestens einer Wasser sammelnden Tasche (7A - 7C), die entlang der Seite eines jeden Kanals vorgesehen ist, **dadurch gekennzeichnet, dass** das Plattenelement (4) im Wesentlichen eben ausgebildet ist, um es im Wesentlichen vertikal hinter einem Fahrzeugrad anzuordnen, wobei die Blenden (5) im Wesentlichen vertikal angeordnet sind, und dass die Blenden (5) extrudiert sind und Abstandshalter zwischen den Blenden angeordnet sind, wobei die Abstandshalter von langgestreckten Stangen getragen werden, die bei der Benutzung horizontal verlaufen, wobei die einen oder mehreren Richtungswechsel bei der Verwendung eine Trennung von Luft und Wasser, die bzw. das in den oder jeden Kanal eintritt, bewirken, so dass Luft durch den oder jeden Kanal hindurchtritt und sich mit der Umgebungsluft auf der zweiten Seite des Plattenelements vermischt und Wasser sich in der oder den Wasser sammelnden Taschen ansammelt und aus der Unterseite des Plattenelements herausfällt.

2. Vorrichtung nach Anspruch 1, wobei die Blenden (6) eine im Wesentlichen identische Gestalt aufweisen.

3. Vorrichtung nach Anspruch 1 oder 2, wobei der oder jeder Kanal (6) gekrümmt ausgebildet ist.

4. Vorrichtung nach einem der Ansprüche 1 bis 3, wobei die Wasser sammelnden Taschen (7A - 7C) nach jedem Richtungswechsel des oder eines jeden Kanals (6) vorgesehen sind.

5. Vorrichtung nach einem der Ansprüche 1 bis 4, wobei der oder jeder Kanal (6) zwei Richtungswechsel aufweist.

6. Vorrichtung nach einem der vorangehenden Ansprüche, wobei die oder jede Tasche (7A - 7C) ein im Wesentlichen vertikal entlang seiner zugehörigen Blende (5) verlaufender Kanal ist, so dass bei der Benutzung Wasser aus den Blenden auf eine Fläche strömt, auf der sich das Rad bewegt.

7. Vorrichtung nach Anspruch 6, wobei der oder jeder Kanal (7A - 7C) im Wesentlichen U-förmig ausgebildet ist.

## Revendications

1. Dispositif permettant d'empêcher les giclées d'émerger d'une roue de véhicule, le dispositif consistant en un panneau (4) formé d'une pluralité de chicanes (5) agencées côte à côte en chevauchement pour définir entre celles-ci au moins un passage (6) qui mène d'un premier côté du panneau qui reçoit de l'eau projetée par la roue à mesure qu'elle tourne, à un second côté arrière du panneau, au moins une partie du ou de chaque passage (6) étant à un angle autre que perpendiculaire au plan du panneau et présentant un ou plusieurs changement(s) de direction en allant du premier côté au second côté du panneau, et au moins une poche collectrice d'eau (7A à 7C) positionnée le long du côté de chaque passage, **caractérisé en ce que** le panneau (4) est sensiblement plan pour être monté sensiblement verticalement derrière une roue de véhicule avec les chicanes (5) sensiblement verticales, et **en ce que** les chicanes (5) sont extrudées et des éléments d'espacement sont prévus entre les chicanes, les éléments d'espacement étant supportés par des arbres allongés qui sont horizontaux à l'usage, dans lequel, à l'usage, ledit(lesdits) un ou plusieurs changement(s) de direction entraîne(nt) la séparation de l'air et de l'eau pénétrant dans le ou chaque passage de sorte que l'air passe à travers le ou chaque passage et se mélange à l'air ambiant sur le second côté du panneau et l'eau s'accumule dans la ou chaque poche collectrice d'eau et tombe par le dessous du panneau.

2. Dispositif selon la revendication 1, dans lequel les chicanes (5) sont de forme sensiblement identique.

3. Dispositif selon la revendication 1 ou la revendication 2, dans lequel le ou chaque passage (6) est sinueux.

4. Dispositif selon l'une quelconque des revendications 1 à 3, dans lequel les poches collectrices d'eau (7A à 7C) sont disposées de manière à suivre chaque changement de direction dans le ou chaque passage (6).

5. Dispositif selon l'une quelconque des revendications 1 à 4, dans lequel le ou chaque passage (6) présente deux changements de direction.

6. Dispositif selon l'une quelconque des revendications précédentes, dans lequel la ou chaque poche (7A à 7C) est un canal s'étendant sensiblement verticalement le long de sa chicane respective (5) de sorte que, à l'usage, l'eau s'égoutte depuis les chicanes sur une surface sur laquelle roule la roue.

7. Dispositif selon la revendication 6, dans lequel le ou chaque canal (7A à 7C) est sensiblement en forme de U.
